# EUROPEAN PATENT SPECIFICATION

(11) **EP 2 564 809 B1**
(45) Date of publication and mention of the grant of the patent: **07.01.2015**
(21) Application number: 12181675.5
(22) Date of filing: 24.08.2012
(51) Int. Cl.: A61C 19/05

(54) **Occlusal pressure measuring device and occlusal pressure measuring system**
Okklusaldruckmessvorrichtung und Okklusaldruckmesssystem
Dispositif de mesure de pression occlusale et système de mesure de pression occlusale

(30) Priority: 30.08.2011 JP 2011187495
(43) Date of publication of application: 06.03.2013
(73) Proprietor: GC Corporation, Bunkyo-ku Tokyo 113-0033 (JP)
(72) Inventor: Kume, Shunjirou, Tokyo, 174-8585 (JP)
(74) Representative: Beck Greener

(56) References cited:
- JP-A- 2005 087 646
- JP-A- 2012 065 941
- US-A- 3 349 489
- US-A- 4 521 186

## Description

### Technical Field

The present invention relates to an occlusal pressure measuring device to be used in measuring occlusal pressure in the dental field; and an occlusal pressure measuring system comprising the same.

### Background Art

Abnormality of occlusion is one of the causes of jaw arthritis, alveolar pyorrhea, and the like. Therefore, it is desirable not only to treat a local area having such symptoms but also to provide a fundamental and comprehensive treatment taking occlusion into consideration. The abnormality of occlusion can be identified by the abnormality of the pressure applied at the time of occlusion, that is, abnormality of occlusal pressure. Conventionally, as a means for obtaining such occlusal pressure, a sheet-shaped device has been used which exhibits colors in different density depending on the degree of the pressure, and by having a patient bite the sheet-shaped device, it is possible to quantitatively capture a distribution of the occlusal pressure.

Further, in recent years there have been suggested: an occlusal pressure measuring device which can capture occlusal pressure in the form of data with electrical information, for example which can capture the changes in the occlusal pressure in real time; an occlusal pressure measuring method and system employing the device, and the like (JP-A 2005-270143 and JP-A 2005-87646). In such an occlusal pressure measuring device and the like, a sensor portion which detects occlusal pressure is formed in a film shape comprising: a thin-film pattern in which an electrical resistance varies in accordance with the force applied by the tooth row; and electrodes which are disposed on and under the thin film at certain intervals in a matrix form. The electrical resistance value which varies based on the occlusal force is obtained, and thereby the changes in the occlusal pressure can be displayed in real time.

Although such an occlusal pressure measuring device makes it possible to obtain an occlusal pressure distribution by the functions of the above described sensor portion, it is difficult to identify which part of the tooth row has caused the occlusal pressure. Even if the occlusal pressure distribution can be obtained, failure to identify the part of the tooth row to which the occlusal pressure corresponds leads to a problem that the obtained data is hard to use for treatments in a practical sense and thus can only be used as a reference. In response to such difficulties, JP-A 2005-270143 and JP-A 2005-87646 devote attention to locating the position of the tooth row. JP-A 2005-270143 discloses that a marking material is applied onto the tooth row and the sensor is bit, thereby transferring the marking material to the sensor; the transferred information on the tooth row given by the marking material is visually compared with the occlusal pressure data displayed on a display screen; and the positional relation between the position of the tooth row and the occlusal pressure is captured. JP-A 2005-87646 discloses making a dental model for each patient by an impression material before measuring occlusal pressure; and then inserting a sheet-shaped sensor in line with this dental model to identify the position.

US 3,349,489 discloses a multiple celled pressure sensitive dental device for measuring relative occlusal pressures.

US 4, 521, 186 discloses a shape device used for dental occlusion which is deformed by the occlusal pressure and retains the deformation.

### Summary of the Invention

### Problems to be Solved by the Invention

JP-A 2005-270143 and JP-A 2005-87646 have made it possible to see the relation between the distribution of the occlusal pressure and the position of the tooth row, compared to other conventional occlusal pressure measuring devices. However, in JP-A 2005-270143, the positional relation is captured visually, and therefore further enhancement of precision is desired. In JP-A 2005-87646, the dental model needs to be made by an impression material before measuring occlusal pressure, therefore causing the procedures to be complicated and causing a lot of troubles to practitioners and patients.

In view of the above problems, the present invention provides an occlusal pressure measuring device which makes it possible to capture the positional relation between measurement results of the occlusal pressure and the tooth row more easily and more precisely. In addition, the present invention provides an occlusal pressure measuring system employing the occlusal pressure measuring device.

### Means for Solving the Problems

The present invention will be described below. In order to make the present invention easy to understand, reference numerals given in the accompanying drawings are shown in parentheses; however, the present invention is not limited to an embodiment shown in the drawings.

A first aspect of the present invention is an occlusal pressure measuring device (1) comprising: a sensor portion (10) capable of measuring occlusal pressure; and a body (20) which transmits information obtained from the sensor portion, wherein the sensor portion is a laminate of a plurality of layers; at least one of the plurality of layers is a pressure sensitive layer (11) capable of detecting occlusal pressure; and at least one outermost layer of the sensor portion is a shape transfer layer (14) which is deformed by the occlusal pressure and retains the deformation even when the occlusal pressure is removed.

A second aspect of the present invention is the occlusal pressure measuring device (1) according to the first aspect, wherein a charge transfer layer (12) to transmit electric charges which is formed by organic transistors is disposed on each of both faces of the pressure sensitive layer (11).

A third aspect of the present invention is the occlusal pressure measuring device (1) according to the first or second aspect, wherein the pressure sensitive layer (11) is formed by having particles of an electrical conductor dispersed in a highly insulating resin.

A fourth aspect of the present invention is an occlusal pressure measuring system capable of measuring occlusal pressure and displaying the results thereof, wherein the occlusal pressure measuring system comprises: the occlusal pressure measuring device (1) according to any one of the first to third aspects; a shape measuring device (32) which converts a shape of the tooth row formed on the shape transfer layer (14) into electrical information; and an information processing device (33) which is capable of processing the information on the occlusal pressure transmitted from the occlusal pressure measuring device (1) and the electrical signals obtained from the shape measuring device; matching the position having the occlusal pressure and the position of the shape of the tooth row; and displaying the occlusal pressure and the shape of the tooth row by at least one of a numerical value, image, and video picture.

### Effects of the Invention

According to the present invention, it is possible to grasp the positional relation between the measurement results of the occlusal pressure and the tooth row more easily and more precisely than ever before.

### Brief Description of the Drawings

Fig. 1 is a perspective view of the appearance of an occlusal pressure measuring device according to one embodiment.
Fig. 2 is a view schematically showing a layer structure of a sensor portion.
Fig. 3 is a conceptual view of a configuration of an occlusal pressure measuring system.

### Modes for Carrying Out the Invention

The functions and benefits of the present invention described above will be apparent from the following modes for carrying out the invention. Hereinafter, the present invention will be described based on the embodiments shown in the drawings. However, the invention is not limited to these embodiments.

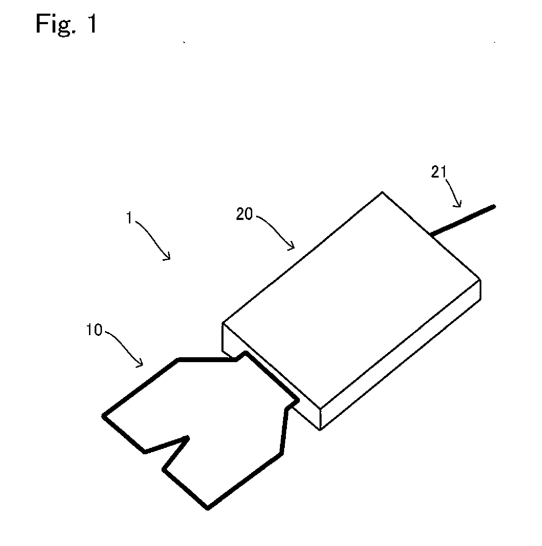

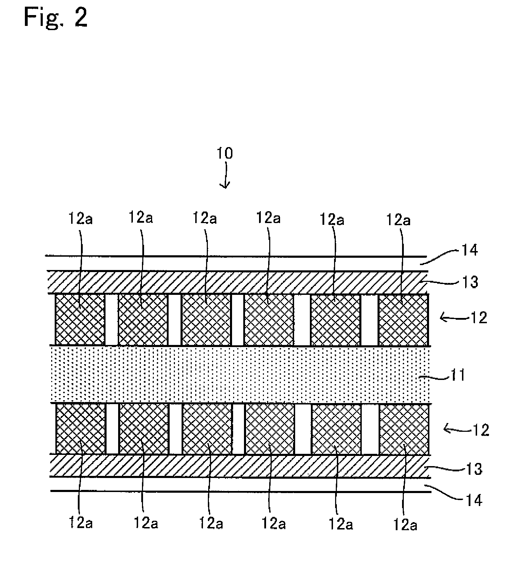

Fig. 1 is a perspective view showing the appearance of an occlusal pressure measuring device 1 according to one embodiment. The occlusal pressure measuring device 1 comprises a sensor portion 10 and a body 20. Fig. 2 schematically shows a layer structure of the sensor portion 10.

The sensor portion 10 detects occlusal pressure and is provided with a means of transferring a shape of the tooth row. As can be seen from Figs. 1 and 2, the sensor portion 10 is a laminate in a predetermined thickness formed in a sheet shape. Further, the sensor portion 10 is generally arched so that it can be easily inserted into the oral cavity, and this is configured to match the dental arch shape.

As seen from Fig, 2, the sensor portion 10 is a laminate of a plurality of layers in its thickness direction; in detail, it comprises a pressure sensitive layer 11, a charge transfer layer 12, an outer layer 13, and a shape transfer layer 14.

The pressure sensitive layer 11 is an area for detecting occlusal pressure. In the present embodiment, it is formed of a material whose electrical resistance value changes due to deformation. More specifically, it is constituted by a material having iron powders dispersed in a silicon rubber base material. That is, when the occlusal pressure is applied to the pressure sensitive layer 11, the layer deforms based on the degree of the occlusal pressure and changes the distance between the iron powders. In detail, the electrical resistance value decreases in the area where the distance between the iron powders is narrowed due to the deformation of the pressure sensitive layer 11; and the electrical resistance value increases in the area where the distance between the iron powders is enlarged due to the deformation of the pressure sensitive layer 11. This enables the occlusal pressure in these areas to be obtained in the form of electrical signals.

Herein, the resolution of detecting the occlusal pressure is affected by a bulk density of the iron powders. That is, when the bulk density is large, the resolution degrades; and when the bulk density is small, the resolution improves.

Further, the dynamic range is affected by a dispersion density of the iron powders in the silicon rubber base material. That is, with the same amount of iron powder, when the silicon rubber base material is thin, the dispersion density of the iron powders increases relatively, causing the dynamic range to decrease. On the other hand, if the silicon rubber base material is made thick, the dispersion density of the iron powders decreases, therefore enabling a high dynamic range to be ensured. Here, the dynamic range refers to a ratio between the minimum value and the maximum value of an identifiable signal.

In the present embodiment, an example has been shown in which the pressure sensitive layer 11 is formed of a material having iron powders dispersed in a silicon rubber base material. However, the material to form the pressure sensitive layer 11 is not particularly restricted as long as it exhibits similar effects. That is, it may be any as long as it has an excellent elasticity and has highly conductive powders or particulate substances dispersed in a base material having a high electrical insulation property. In specific, a resin, rubber material, and the like may be employed as the base material. Further, examples of the highly conductive powder or particle include not only iron powder, but also include: metal powders of copper, silver, gold, etc.; metal particle; carbon powder; carbon particle; other conductive powders and conductive particles.

The charge transfer layer 12 is disposed on both front and back faces of the pressure sensitive layer 11, and permits or prevents transfer of electric charges, to transmit signals based on the state of the pressure sensitive layer 11. More specifically, the charge transfer layer 12 is formed by having elements 12a arranged at certain intervals in a grid-like manner. Therefore, although Fig. 2 shows the arrangement of the elements 12a in one direction, the elements 12a are aligned in the same manner also in the front and back direction of the drawing sheet of Fig. 2.

The charge transfer layer 12 preferably not only has the function to transfer electric charges but also has high thermal stability and excellent flexibility. From such a viewpoint, the charge transfer layer 12 may employ an organic transistor as the element 12a.

The organic transistor is a microelement with a switching function, being a transistor formed by arranging drain, source, and gate terminals on an organic semiconductor having carbon as a backbone and other elements bonded. The organic transistor can be applied onto a film (which is the outer layer 13 in the case of the present embodiment), at a processing temperature of approximately room temperature. A method of applying the organic transistor is not particularly restricted; examples thereof include an ink-jet method and a gravure printing method using a roll. Therefore, the sensor portion 10 can be produced far more easily compared to the conventional cases.

By employing an organic transistor in the charge transfer layer 12 in this way, it is possible, with its switching function, to inhibit disturbance in measurements and to enhance the measurement stability, accordingly enabling measurement results with higher reliability to be obtained. As for the arrangement density of the elements 12a in the charge transfer layer 12, it is preferable to arrange the elements 12a such that the resolution of occlusal pressure measurement becomes around 0.2 mm. With this, an occlusal pressure distribution can be obtained with particularly high precision. In specific, the pitch of the elements 12a is preferably 0.1 to 1.0 mm.

Further, by employing the organic transistor, it is possible to form the charge transfer layer in high flexibility and in excellent conformity to the laminated sheet (outer layer 13). This enables the charge transfer layer to follow the deformation of the outer layer 13 and the pressure sensitive layer 11 well; therefore, even when the outer layer 13 or the pressure sensitive layer 11 are caused to deform along the contour of the tooth surface by the occlusal pressure, the charge transfer layer follows the deformation and accordingly deforms with high precision. As a result, the precision of the obtained occlusal pressure can be enhanced.

The outer layer 13 is a layer which is layered on a side of the charge transfer layer 12, which side is opposite to where the above pressure sensitive layer 11 is layered; and it is a layer that is directly touched by the teeth of an examinee having penetrated through the below described shape transfer layer 14. Further, it protects the charge transfer layer 12, the pressure sensitive layer 11, and the like provided between one and the other of the outer layers 13, and fixates the charge transfer layer 12; and it also serves as an insulating member. Furthermore, the outer layer 13 is preferably a material which can be deformed by being heated by a heater or the like. From such a viewpoint, a material such as a hydrogenated styrene-isoprene block copolymer for example may be employed as the outer layer 13.

Furthermore, although not shown, an electrical conductor pattern is formed between the outer layer 13 and the charge transfer layer 12. The electrical conductor pattern is configured to be electrically connected to the element 12a. Additionally, a conductive member extends from the electrical conductor pattern; and is electrically connected to the body 20 as described below. The electrical conductor pattern may be formed by printing or some other means. Further, the conductive member may be a conductive wire and is fixed to the outer layer 13 by means of an insulating adhesive or thermal welding.

The shape transfer layer 14 is a layer which is layered on the topmost surface of the sensor portion 10 and is directly touched by the teeth of an examine. The shape transfer layer 14 is formed of a material which deforms along the surface shape of the teeth in the area touched by the teeth at a time when the examinee bites the sensor portion 10, and which keeps deformed even after the sensor portion 10 is removed from the examinee's mouth, that is even after the pressure is removed. The type of the material is not particularly limited as long as it has such characteristics; however, in view that it is inserted into the oral cavity, it is preferable to employ a material that is used for a dental wax.

The layer thickness of the shape transfer layer 14 is not particularly limited. However, if the layer is too thin, the shape may not be transferred properly; and on the other hand if the layer is too thick, the occlusal pressure itself may be affected. From such viewpoints, although it depends on the physical property of the material to constitute the shape transfer layer 14, the layer thickness is preferably about 1 mm for one shape transfer layer 14.

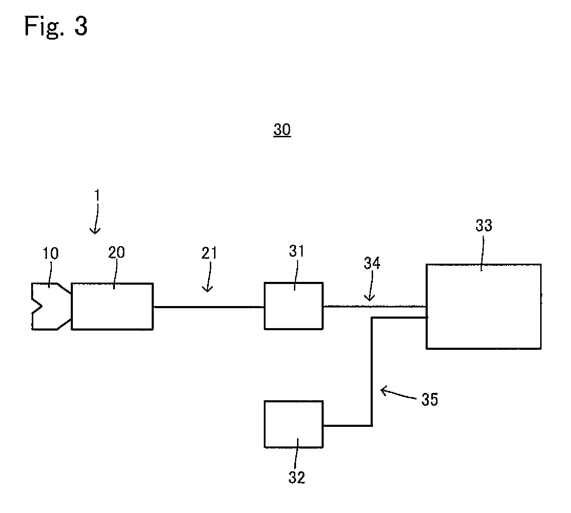

Further, the sensor portion 10 described above may be provided with a reference point. That is, a predetermined position which can be electrically detected by the pressure sensitive layer 11 and the charge transfer layer 12 is given as the reference point. In addition, another reference point (a mark or the like) that can be read by the below described shape measuring device 32 (see Fig. 3) is arranged in a position corresponding to the above reference point of the sensor portion 10. By doing this, these positions are matched based on this reference point which can be read by the shape measuring device and the above reference point which can be electrically detected; and thereby the occlusal pressure data and the position on the shape transfer layer can be matched easily with high precision.

Back to Fig. 1, the description of the occlusal pressure measuring device 1 will be continued. The body 20 is a device for transmitting electrical data regarding the occlusal pressure detected by the sensor portion 10 to a relay box 31 and to an information processing device 33 (see Fig. 3). The sensor portion 10 and the body 20 are connected with each other in the following manner. As described above, an electrical conductor pattern not shown is formed on a face of the outer layer 13, which face is on the charge transfer layer 12 side. A conductive member extends from the electrical conductor pattern and is electrically connected to the body 20. Accordingly, the pressure sensitive layer 11 and the charge transfer layer 12 can be electrically connected to the body 20 via the electrical conductor pattern and the conductive member.

In addition, the body 20 is provided with an input-output cable 21 which can output the electrical signals to the outside and can input signals from the outside to the body 20.

According to this occlusal pressure measuring device 1, it is possible to measure temporal changes of the occlusal pressure by the pressure sensitive layer 11, the charge transfer layer 12 and the like of the sensor portion 10, and to obtain a shape of the tooth row by the shape transfer layer 14. In specific, since the occlusal pressure and the data for capturing the shape of the tooth row can be obtained simultaneously, it is not necessary to insert something into the oral cavity of the examinee again in order to obtain the shape of the tooth row, which makes the procedures simple.

Further, if the shape of the tooth row formed on the shape transfer layer 14 is turned into data by the shape measuring device 32 (see Fig. 3) as described below, it can be synthesized with the occlusal pressure data and the position causing the occlusal pressure can be accurately identified.

Furthermore, if the charge transfer layer 12 is constituted by an organic transistor, each constitution thereof has excellent flexibility in the sensor portion 10, and thus the charge transfer layer 12 can follow the contour of the tooth surface to detect the occlusal pressure. As a result, the detected occlusal pressure accurately reflects the actual occlusal pressure.

Also, by employing an organic transistor in the charge transfer layer 12 of the sensor 10, it is possible to easily arrange this layer on the outer layer and to adopt printing or a so-called roll-to-roll process, thereby enabling improvement of the productivity.

In addition, a conventional sheet for measuring occlusal pressure needs to be made thin so that it conforms with the surface shape of the tooth row as much as possible. On the other hand, the sensor portion 10 of the occlusal pressure measuring device 1 is high in flexibility and excellent in following deformation; so although being thin is favorable, it is not necessarily required to be as thin as the conventional sheet for measurement. In specific, even when the thickness of the sensor portion 10, excluding the thickness of the shape transfer layer 14, is 20 to 500 µm, the sensor portion 10 can measure occlusal pressure with high precision.

Next, an occlusal pressure measuring system 30 employing the above described occlusal pressure measuring device 1 will be described. Fig. 3 schematically shows the system structure. The occlusal pressure measuring system 30 is provided not only with the occlusal pressure measuring device 1 but also with a relay box 31, a shape measuring device 32, and an information processing device 33. Herein, the relay box 31 and the information processing device 33 are electrically connected by a cable 34; and the shape measuring device 32 and the information processing device 33 are electrically connected by a cable 35.

The occlusal pressure measuring device 1 is as described above, so the description thereof is omitted herein.

The relay box 31 has a function to receive information from the occlusal pressure measuring device 1 and amplify weak signals to transmit them to the information processing device 33. Therefore, the relay box 31 has a connecting terminal to which the input-output cable 21 of the occlusal pressure measuring device 1 can be connected, and thus the input-output cable 21 is connected thererto. Further, the relay box 31 comprises there inside an amplifier to amplify the signals from the occlusal pressure measuring device 1. A known signal amplification device may be used as the amplifier. In addition, the relay box 31 is provided with an output connecting terminal for transmitting the amplified signals to the information processing device 33. Specifically, the cable 34 is connected thereto.

In the present embodiment, an example has been introduced in which the relay box 31 is arranged separately from the occlusal pressure measuring device 1. However, the function of the relay box 31 may be incorporated into the body 20 of the occlusal pressure measuring device 1.

The cable 34 is a member to electrically connect the relay box 31 to the information processing device 33 so as to enable transmitting and receiving information. The configuration of the cable 34 is not particularly limited; however, in view of easy handling, a USB cable may be employed.

The shape measuring device 32 is a device for converting into electrical shape data, the shape of the tooth row transferred onto the shape transfer layer 14 of the occlusal pressure measuring device 1. This enables the shape of the tooth row to be turned into data and to be processed by the information processing device 33. The shape measuring device 32 is not particularly limited as long as it has such functions; examples thereof include a three dimensional measuring device, a scanner device and the like.

The cable 35 is a member to electrically connect the shape measuring device 32 to the information processing device 33 so as to enable transmitting and receiving information. The configuration of the cable 35 is not particularly limited; however, in view of easy handling, a USB cable may be employed.

The information processing device 33 is a device for giving predetermined processing to the signals which contain information on the occlusal pressure sent from the relay box 31 via the cable 34 and to the signals which contain information on the shape of the tooth row sent from the shape measuring device 32 via the cable 35, and turning them into a numerical value, image, video picture or the like.

Therefore, the information processing device 33 comprises for example an input port to which the signals from the relay box 31 and the shape measuring device 32 are inputted; a memory device (ROM) in which necessary information of a predetermined computing equation is stored in advance; a central processing unit (CPU) for carrying out an operation; RAM which functions as a work area or an area for storing temporary information; and an output port for outputting the operation results. Thus, commercially available personal computers may be used. Further, the information processing device 33 comprises a device for displaying information that has been turned into a numerical value, an image, a video picture, or the like as a result of the operation. Specific examples include a monitor of a personal computer.

In more detail, in the information processing device 33, electrical current information (specifically, an electrical current value based on occlusal pressure) transmitted from each of the elements 12a is converted into occlusal pressure based on the arrangement distribution of the elements 12a in the charge transfer layer 12. Thereby, the information on the occlusal pressure can be obtained. The obtained information on the occlusal pressure may be processed such that it is presented visually with color, shading, or the like, other than in a numerical value. In this case, it may be presented two-dimensionally or three-dimensionally.

Further, the information processing device 33 processes the signals turned into data based on the information on the shape of the tooth row from the shape measuring device 32, so as to represent them visually as the shape of the tooth row.

In addition, the information processing device 33 carries out processing of synthesizing the above information on the occlusal pressure and the information on the shape of the tooth row and displaying them in a manner to match the position having the occlusal pressure and the position of the shape of the tooth row. At this point, when the above described electrically detectable reference point and the reference point that can be read by the shape measuring device are provided to the sensor portion 10, the processing may be carried out in a way to match theses positions. Also, even when these reference points are not provided, the same processing may be carried out on a basis of a characteristic position (for example, an angle portion and the like) on the sensor portion 10.

Namely, the information processing device 33 is provided with a program for carrying out each of the above processing; and is configured to be capable of carrying out an operation based on various inputted data.

With this occlusal pressure measuring system 30, measurements are carried out for example in the following way.

An examinee is asked to hold the sensor portion 10 of the occlusal pressure measuring device 1 between his/her teeth and to bite the sensor portion 10. At this stage, when starting measurement, the voltage is generated in the sensor portion 10. And when the electrical signals proportional to the occlusal pressure reaches a predetermined threshold level or above, the organic transistor (charge transfer layer) starts to conduct electricity to cause an electric current to flow. By calculating this current value, it is possible to obtain the occlusal pressure associated with the current value. Other than reading the current value itself, a method may also be adopted in which the electrical resistance meter is arranged to read a voltage value and thereby the current value is calculated indirectly.

By having the examinee bite the sensor portion 10, the electrical information based on the occlusal pressure is produced in the sensor portion 10 and this information is transmitted to the relay box 31. In the relay box 31, the electrical information produced in the sensor portion 10 is amplified by the functions of the amplifier provided thereto, and is transmitted to the information processing device 33. And then the information processing device 33 carries out the above described information processing and provides various information to the practitioner, examinee, and the like.

On the other hand, the sensor portion 10 bit by the examinee is taken out from the examinee's oral cavity, and this sensor portion 10 is set on the shape measuring device 32. Then the shape measuring device 32 carries out measurement of the shape of the tooth row formed on the shape transfer layer 14 of the sensor portion 10, and turns the shape of the tooth row into data.

After that, the information processing device 33 carries out the above information processing, displays the shape of the tooth row, and outputs the occlusal pressure data in a position corresponding to the displayed shape of the tooth row.

According to the occlusal pressure measuring system 30, positional matching of the shape of the tooth row and the part causing the occlusal pressure is done with high precision as described above. Therefore, information on the generation of the occlusal pressure can be obtained more accurately.

Further, at this time the examinee needs to bite the sensor portion 10 only once, which therefore can reduce burden on both the examinee and the practitioner.

Herein, if the sensor portion 10 employs an organic transistor, it has excellent flexibility and thus can follow the contour of the tooth surface to detect occlusal pressure. Accordingly, the detected occlusal pressure can be even more accurate in relation to the actual occlusal pressure applied.

In the present embodiment, the organic transistor is employed in the charge transfer layer; however the present invention is not limited to this. Other common charge transfer layers may be employed. In the present embodiment, in view of the advantage that more accurate occlusal pressure can be obtained as described above, an example of employing an organic transistor has been given.

Likewise, the pressure sensitive layer and the outer layer are not limited to the present embodiment; and known configurations may be adopted.

### Description of the Reference Numerals

- 1: occlusal pressure measuring device
- 10: sensor portion
- 11: pressure sensitive layer
- 12: charge transfer layer
- 13: outer layer
- 14: shape transfer layer
- 30: occlusal pressure measuring system
- 32: shape measuring device
- 33: information processing device

## Claims

1. An occlusal pressure measuring device (1) comprising:
a sensor portion (10) capable of measuring occlusal pressure; and
a body (20) which transmits information obtained from the sensor portion,
wherein the sensor portion is a laminate of a plurality of layers;
at least one of the plurality of layers is a pressure sensitive layer (11) capable of detecting occlusal pressure; and
at least one outermost layer of the sensor portion is a shape transfer layer (14) which is deformed by the occlusal pressure and retains the deformation even when the occlusal pressure is removed.

2. The occlusal pressure measuring device (1) according to claim 1, wherein a charge transfer layer (12) to transmit electric charges which is formed by organic transistors is disposed on each of both faces of the pressure sensitive layer (11).

3. The occlusal pressure measuring device (1) according to claim 1 or 2, wherein the pressure sensitive layer (11) is formed by having particles of an electrical conductor dispersed in a highly insulating resin.

4. An occlusal pressure measuring system (30) capable of measuring occlusal pressure and displaying the results thereof,
wherein the occlusal pressure measuring system comprises:
the occlusal pressure measuring device (1) according to any one of claims 1 to 3;
a shape measuring device (32) which converts a shape of the tooth row formed on the shape transfer layer (14) into electrical information; and
an information processing device (33) which is capable of processing the information on the occlusal pressure transmitted from the occlusal pressure measuring device (1) and the electrical signals obtained from the shape measuring device; matching the position having the occlusal pressure and the position of the shape of the tooth row; and displaying the occlusal pressure and the shape of the tooth row by at least one of a numerical value, image, and video picture.

## Patentansprüche

1. Okklusaldruckmessvorrichtung (1), umfassend:
einen Sensorabschnitt (10), der den okklusalen Druck messen kann; und
einen Körper (20), der von dem Sensorabschnitt erhaltene Informationen übermittelt,
wobei der Sensorabschnitt ein Laminat aus einer Mehrzahl von Schichten ist;
wobei wenigstens eine Schicht der Mehrzahl von Schichten eine druckempfindliche Schicht (11) ist, die okklusalen Druck erkennen kann; und
wobei wenigstens eine äußerste Schicht des Sensorabschnitts eine Formübertragungsschicht (14) ist, die verformt wird durch den okklusalen Druck und die Verformung auch nach Entfernung des okklusalen Drucks aufrechterhält.

2. Okklusaldruckmessvorrichtung (1) nach Anspruch 1, wobei eine Ladungsübertragungsschicht (12) zur Übermittlung elektrischer Ladungen, die durch organische Transistoren gebildet wird, auf jeder der beiden Seiten der druckempfindlichen Schicht (11) angeordnet ist.

3. Okklusaldruckmessvorrichtung (1) nach Anspruch 1 oder 2, wobei die druckempfindliche Schicht (11) dadurch gebildet wird, dass Teilchen eines elektrischen Leiters in einem stark isolierenden Harz verteilt sind.

4. Okklusaldruckmesssystem (30), das okklusalen Druck messen und die Messergebnisse darstellen kann,
wobei das Okklusaldruckmesssystem folgendes umfasst:
die Okklusaldruckmessvorrichtung (1) nach einem der Ansprüche 1 bis 3;
eine Formmessvorrichtung (32), die eine Form auf der Formübertragungsschicht (14) ausgebildete Form einer Zahnreihe in elektrische Informationen umwandelt; und
eine Informationsverarbeitungsvorrichtung (33), welche die von der Okklusaldruckmessvorrichtung (1) übermittelten Informationen und die von der Formmessvorrichtung erhaltenen elektrischen Signale verarbeiten kann; wobei die Position mit dem okklusalen Druck und die Position der Form der Zahnreihe angepasst werden; und wobei der okklusale Druck und die Form der Zahnreihe wenigstens durch einen numerischen Wert, ein Bild oder ein Videobild dargestellt werden.

## Revendications

1. Dispositif de mesure de pression occlusale (1) comprenant :
une partie capteur (10) apte à mesurer la pression occlusale ; et
un corps (20) qui transmet les informations obtenues de la partie capteur,
dans lequel la partie capteur est un stratifié d'une pluralité de couches ;
au moins l'une parmi la pluralité de couches est une couche sensible à la pression (11) apte à détecter la pression occlusale ; et
au moins une couche la plus externe de la partie capteur est une couche de transfert de forme (14) qui est déformée par la pression occlusale et conserve la déformation, même lorsque la pression occlusale est supprimée.

2. Dispositif de mesure de pression occlusale (1) selon la revendication 1, dans lequel une couche de transfert de charge (12) pour transmettre des charges électriques qui est formée par des transistors organiques est disposée sur chacune des deux faces de la couche sensible à la pression (11).

3. Dispositif de mesure de pression occlusale (1) selon la revendication 1 ou 2, dans lequel la couche sensible à la pression (11) est formée en ayant des particules d'un conducteur électrique dispersées dans une résine hautement isolante.

4. Système de mesure de pression occlusale (30) apte à mesurer la pression occlusale et à en afficher les résultats,
dans lequel le système de mesure de pression occlusale comprend :
le dispositif de mesure de pression occlusable (1) selon l'une quelconque des revendications 1 à 3 ;
un dispositif de mesure de forme (32) qui convertit une forme de la rangée de dents formée sur la couche de transfert de forme (14) en informations électriques ; et
un dispositif de traitement d'informations (33) qui est apte à traiter les informations sur la pression occlusale transmises par le dispositif de mesure de pression occlusale (1) et les signaux électriques obtenus du dispositif de mesure de forme ; à faire correspondre la position ayant la pression occlusale et la position de la forme de la rangée de dents ; et à afficher la pression occlusale et la forme de la rangée de dents par au moins l'une d'une valeur numérique, image, et image vidéo.
